Europäisches Patentamt

(19) European Patent Office

Office européen des brevets

(11) Numéro de publication: **0 016 710**

**A1**

(12) **DEMANDE DE BREVET EUROPEEN**

(21) Numéro de dépôt: **80400377.0**

(22) Date de dépôt: **20.03.80**

(51) Int. Cl.³: **F 01 P 7/04**
**F 02 B 67/06**

(30) Priorité: **23.03.79 FR 7907976**

(43) Date de publication de la demande:
**01.10.80 Bulletin 80/20**

(84) Etats Contractants Désignés:
**DE GB IT**

(71) Demandeur: **SOCIETE ANONYME AUTOMOBILES CITROEN**
**117 à 167, Quai André Citroen**
**F-75747 Paris Cedex 15(FR)**

(71) Demandeur: **CAUTOMOBILES PEUGEOT**
**75, avenue de la Grande Armée**
**F-75116 Paris(FR)**

(72) Inventeur: **Barthelemy, André Jean**
**52, route de Limours**
**F-78470 St Remy Les Chevreuse(FR)**

(74) Mandataire: **Boivin, Claude**
**9, rue Edouard-Charton**
**F-78000 Versailles(FR)**

(54) Dispositif d'entraînement d'accessoires de véhicules automobiles.

(57) Dispositif d'entraînement d'accessoires de véhicules automobiles dans lequel deux rapports d'entraînement entre un organe moteur et un organe récepteur sont possibles et qui comprend un train planétaire et des moyens de commande comportant en embrayage, sensibles à la vitesse de rotation de l'organe moteur et permettant d'entraîner l'organe récepteur soit à une vitesse surmultipliée par l'intermédiaire du train planétaire, soit à la vitesse de l'organe moteur par l'intermédiaire d'un accouplement unidirectionnel.

Le train planétaire comprend une couronne (12) solidaire d'un élément fixe, un planétaire (4) solidaire de l'organe récepteur (1), et un porte-satellites (8); l'embayage (13) à (16) est disposé entre le porte-satellites (8) et l'organe moteur (6), en étant commandé au débrayage par des moyens centrifuges (13), alors que l'accouplement unidirectionnel (7) est disposé entre l'organe moteur (6) et le planétaire (4).

Fig.1

- 1 -

Dispositif d'entraînement d'accessoires de véhicules automobiles.

La présente invention concerne les dispositifs propres à entraîner des accessoires de véhicules automobiles, tels qu'un ventilateur, une pompe à eau ou un alternateur, à partir du moteur du véhicule.

Le moteur d'un véhicule a une vitesse qui varie dans de larges limites. Or, pour les accessoires de ce véhicule, qui sont entraînés par ce moteur, en particulier pour l'alternateur, il est nécessaire d'avoir une vitesse relativement stable, en particulier une vitesse importante à bas régime du moteur tout en évitant une survitesse à régime élevé du moteur.

On a, par suite, réalisé des dispositifs d'entraînement de ces accessoires dans lesquels deux rapports d'entraînement entre l'organe moteur et l'organe récepteur sont possibles, de façon que le rapport d'entraînement soit plus élevé lorsque l'arbre moteur est à bas régime que lorsqu'il tourne à un régime élevé.

On connaît, en particulier, des dispositifs d'entraînement comprenant un train planétaire et des moyens de commande comportant un embrayage, sensibles à la vitesse de rotation de l'organe moteur et permettant d'entraîner l'organe récepteur soit à une vitesse surmultipliée par l'intermédiaire du train planétaire, soit à la vitesse de l'organe moteur par l'intermédiaire d'un accouplement unidirectionnel. Mais ces dispositifs sont relativement compliqués et nécessitent en général un embrayage à commande électro-magnétique.

La présente invention a pour objet un dispositif d'entraînement du type ci-dessus qui est à commande entièrement mécanique.

Le dispositif selon l'invention est caractérisé en ce que le train planétaire comprend une couronne solidaire d'un élément fixe, un planétaire solidaire de l'organe récepteur, et un porte-satellites et en ce que l'embrayage est disposé entre le porte-satellites et l'organe moteur, en étant commmandé au débrayage par des moyens centrifuges, alors que l'accouplement unidirectionnel est disposé entre l'organe moteur et le planétaire.

Dans un mode de réalisation particulier de l'invention, dans lequel l'organe moteur est constitué par une poulie, l'embrayage comprend au moins deux masselottes respectivement montées rotatives sur un axe solidaire de la poulie et maintenues dans une gorge ménagée sur la circonférence extérieure du porte-satellites par un ressort disposé entre la surface intérieure de la poulie et une cavité ménagée dans la masselotte. L'organe unidirectionnel est avantageusement constitué par une roue libre à galets.

On a décrit ci-après, à titre d'exemple non limitatif, un mode de réalisation du dispositif d'entraînement selon l'invention, avec référence au dessin annexé dans lequel :

La Figure 1 est une vue en coupe axiale du dispositif;
La Figure 2 en est une coupe transversale suivant II-II de la figure 1.

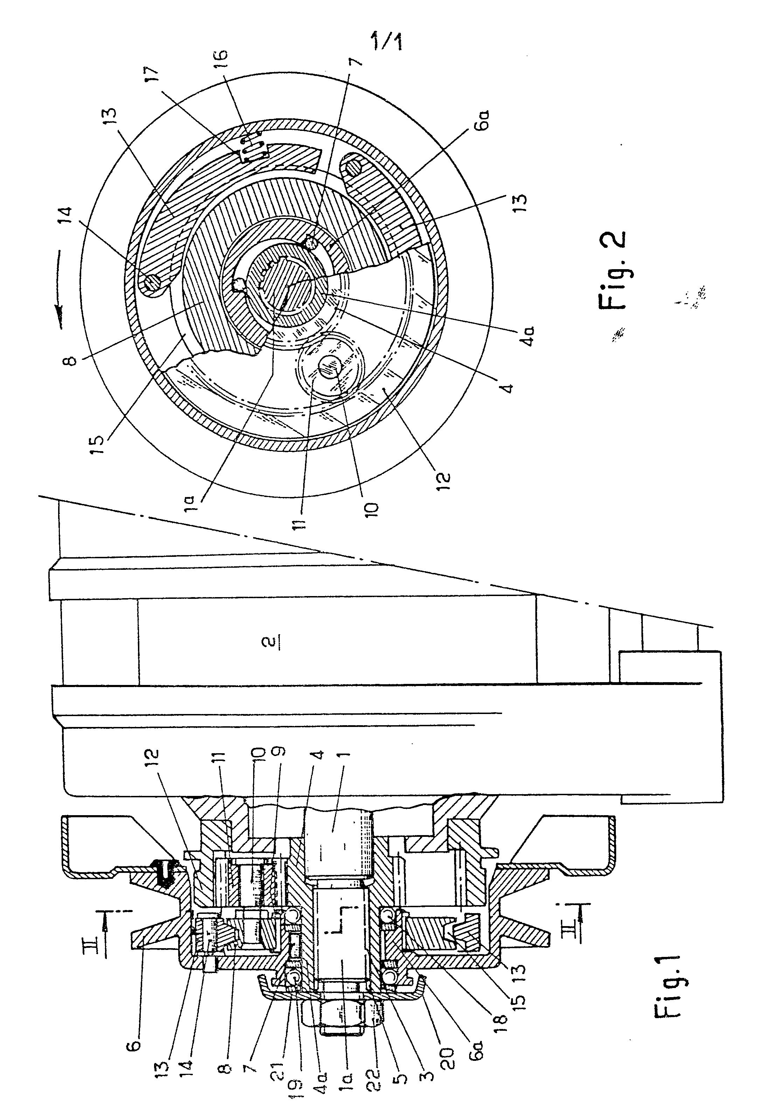

Tel qu'il est représenté au dessin, le dispositif selon l'invention comprend un arbre 1 qui est ici l'arbre d'entrée d'un alternateur 2 et dont l'extrémité 1a est munie de cannelures 3. Un planétaire 4 présente un manchon 4a qui est monté par l'intermédiaire de cannelures 5 sur l'extrémité cannelée 1a de l'arbre 1. Une poulie d'entraînement 6, qui est reliée par l'intermédiaire d'une courroie non représentée à une autre poulie solidaire en rotation du vilebrequin d'un moteur à combustion, ces éléments n'étant pas non plus représentés, comporte une portée 6a qui est montée sur le manchon 4a du planétaire 4 par l'intermédiaire d'une roue libre 7 à galets de coincement; cette roue libre permet la rotation libre du planétaire par rapport à la poulie dans le sens de la flèch f (Fig. 2) qui est le sens de rotation normal de la poulie. Un porte-satellites 8 est monté à rotation sur la portée 6a de la poulie 6 et maintenu par un circlips 9. Ce porte-satellites porte des axes 10 sur lesquels sont montés rotatifs des satellites 11 qui sont interposés entre le planétaire 4 et une couronne dentée 12 solidaire du stator de l'alternateur 1.

Un embrayage centrifuge est interposé entre la poulie d'entraînement 6 et le porte-satellites 8. Cet embrayage comprend deux masselottes 13 qui sont montées pivotantes sur des axes 14 portés par la poulie 6 et qui peuvent s'engager dans une gorge 15 ménagée sur la circonférence extérieure du porte satellites 8. Un ressort 16 disposé entre la surface intérieure de la poulie et une cavité 17 ménagée dans la masselotte tend à maintenir celle-ci engagée dans la gorge 15, ce qui rend le porte-satellites solidaire de la poulie.

Deux paliers anti-friction 18 et 19 sont disposés respectivement d'une part entre une surface radiale du planétaire 4 et une surface radiale du manchon 6a de la poulie 6 et d'autre part entre la surface radiale opposée de ce manchon 6a et une coupelle 20 maintenue en contact avec le palier 19, avec interposition d'une rondelle élastique 21, par un écrou 22 vissé sur l'extrémité 1a de l'arbre 1.

Lorsque la poulie 6 tourne à bas régime, l'embrayage est en position embrayée car les masselottes 13, sous l'action des ressorts 16 sont en contact avec les faces de la gorge 15 du porte-satellites 8; ce porte-satellites tourne par suite en synchronisation avec la poulie 6. Les satellites 11 sont entraînés en rotation autour de la couronne 12 et entraînent le planétaire 4 et, par suite, l'arbre 1 à une vitesse surmultipliée par rapport à celle du porte-satellites et de la poulie, par exemple double. L'accouplement unidirectionnel 7 fonctionne alors en roue libre.

Quand la poulie 6 atteint une vitesse prédéterminée et fonction des ressorts 16, les masselottes 13, sous l'effet de la force centrifuge, à l'encontre de l'effort exercé par ces ressorts 16, quittent la gorge 15 du porte-satellites 8 et l'embrayage est alors en position débrayée. La vitesse de rotation du planétaire 4 décroit jusqu'à atteindre celle de la poulie 6. A ce moment, les galets de l'accouplement 7 se coincent et la poulie 6 entraîne alors le planétaire 4 directement par l'intermédiaire de la roue libre 7.

Lorsque la vitesse de rotation de la poulie 6 diminue jusqu'à atteindre la vitesse prédéterminée, la force centrifuge n'agit plus; les masselottes 13 se réengagent dans la gorge 15 du porte-satellites 8, sous l'effet de la force exercée par les ressorts 16, et l'embrayage est à nouveau en position embrayée, de telle sorte que le planétaire 4 et l'arbre 1 sont de nouveau entraînés avec multiplication de vitesse par effet planétaire.

Il va de soi que la présente invention ne doit pas être considérée comme limitée au mode de réalisation décrit et représenté, mais en couvre, au contraire, toutes les variantes.

## Revendications de brevet

1. Dispositif d'entraînement d'accessoires de véhicules automobiles, dans lequel deux rapports d'entraînement entre un organe moteur et un organe récepteur sont possibles et qui comprend un train planétaire et des moyens de commande comportant un embrayage, sensibles à la vitesse de rotation de l'organe moteur et permettant d'entraîner l'organe récepteur soit à une vitesse surmultipliée par l'intermédiaire du train planétaire, soit à la vitesse de l'organe moteur par l'intermédiaire d'un accouplement unidirectionnel, caractérisé en ce que le train planétaire comprend une couronne (12) solidaire d'un élément fixe, un planétaire (4) solidaire de l'organe récepteur (1) et un porte-satellites(8), et en ce que l'embrayage (13 à 16) est disposé entre le porte-satellites(8) et l'organe moteur (6), en étant commandé au débrayage par des moyens centrifuges (13), alors que l'accouplement unidirectionnel (7) est disposé entre l'organe moteur (6) et le planétaire (4).

2. Dispositif selon la revendication 1, dans lequel l'organe moteur est constitué par une poulie, caractérisé en ce que l'embrayage comprend au moins deux masselotes (13) respectivement montées rotatives sur un axe (14) solidaire de la poulie (6) et maintenues dans une gorge (15) ménagée sur la circonférence extérieure du porte-satellites (8) par un ressort (16) disposé entre la surface intérieure de la poulie (6) et une cavité (17) ménagée dans la masselotte.

3. Dispositif selon l'une quelconque des revendications 1 ou 2, caractérisé en ce que l'accouplement unidirectionnel(7)est constitué par une roue libre à galets.

Fig.1

Fig. 2

1/1

0016710

Office européen
des brevets

**RAPPORT DE RECHERCHE EUROPEENNE**

Numéro de la demande

EP 80 40 0377

| Catégorie | Citation du document avec indication. en cas de besoin, des parties pertinentes | Revendication concernee |
|---|---|---|
| X | <u>FR - A - 1 261 302</u> (GRANJON) <br> * Figures 1,2,3; page 3, résumé * | 1,2,3 |
| | -- | |
| | <u>US - A - 3 108 494</u> (GENERAL MOTORS) <br> * Colonne 1, lignes 8-60 * | 1 |
| | -- | |
| X | <u>US - A - 3 314 308</u> (GENERAL MOTORS) <br> * Colonne 2, ligne 16 à colonne 3, ligne 69 * | 1,2,3 |
| | -- | |
| A | <u>US - A - 3 884 089</u> (FMC) <br> * Figure 2 * | 1 |
| | -- | |
| A | <u>US - A - 3 096 662</u> (McRAE) <br> * Figure 3; colonne 2, lignes 5-44 * | 2,3 |
| | -- | |
| A | <u>US - A - 3 502 056</u> (DILLARD) <br> * Colonne 1, lignes 9-35 * | 1,2 |
| | ---- | |

**DOCUMENTS CONSIDERES COMME PERTINENTS**

CLASSEMENT DE LA DEMANDE (Int. Cl.).

F 01 P 7/04
F 02 B 67/06

DOMAINES TECHNIQUES RECHERCHES (Int. Cl.)

F 01 P
F 02 B

CATEGORIE DES DOCUMENTS CITES

X: particulierement pertinent
A: arrière-plan technologique
O: divulgation non-ecrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a ete etabli pour toutes les revendications

| Lieu de la recherche | Date d'achevement de la recherche | Examinateur |
|---|---|---|
| La Haye | 03-06-1980 | WASSENAAR |

OEB Form 1503.1 06.78